(19) Europäisches Patentamt / European Patent Office / Office européen des brevets

(11) **EP 1 329 974 B1**

(12) **EUROPEAN PATENT SPECIFICATION**

(45) Date of publication and mention of the grant of the patent:
**02.05.2018 Bulletin 2018/18**

(21) Application number: **01963431.0**

(22) Date of filing: **05.09.2001**

(51) Int Cl.:
***H01G 11/64*** *(2013.01)* ***H01G 11/58*** *(2013.01)*
***H01M 6/16*** *(2006.01)* ***H01M 10/0525*** *(2010.01)*
***H01M 10/0567*** *(2010.01)* ***H01M 10/42*** *(2006.01)*
***H01G 9/20*** *(2006.01)*

(86) International application number:
**PCT/JP2001/007690**

(87) International publication number:
**WO 2002/021629 (14.03.2002 Gazette 2002/11)**

(54) **NON-AQUEOUS LIQUID ELECTROLYTE SECONDARY CELL AND NON-AQUEOUS LIQUID ELECTROLYTE ELECTRIC DOUBLE LAYER CAPACITOR**

SEKUNDÄRZELLE MIT WASSERFREIEM FLÜSSIGELEKTROLYT UND ELEKTRISCHER DOPPELSCHICHTKONDENSATOR MIT WASSERFREIEM FLÜSSIGELEKTROLYT

CELLULE SECONDAIRE AVEC ELECTROLYTE LIQUIDE NON AQUEUX ET CONDENSATEUR ELECTRIQUE A DOUBLE COUCHE AVEC ELECTROLYTE LIQUIDE NON AQUEUX

(84) Designated Contracting States:
**DE FR GB**

(30) Priority: **07.09.2000 JP 2000272080**
**07.09.2000 JP 2000272081**

(43) Date of publication of application:
**23.07.2003 Bulletin 2003/30**

(73) Proprietor: **Bridgestone Corporation**
**Tokyo 104-0031 (JP)**

(72) Inventors:
- **OTSUKI, Masashi**
  **Tokyo 104-0031 (JP)**
- **ENDO, Shigeki**
  **Tokyo 104-0031 (JP)**
- **OGINO, Takao**
  **Tokyo 104-0031 (JP)**

(74) Representative: **DREISS Patentanwälte PartG mbB**
**Postfach 10 37 62**
**70032 Stuttgart (DE)**

(56) References cited:
**EP-A1- 1 205 997** **EP-A1- 1 253 662**
**WO-A-97/44842** **CA-A1- 2 319 384**
**JP-A- 6 013 108** **JP-A- 9 050 944**
**JP-A- 11 185 808** **JP-A- 11 185 808**
**JP-A- 11 191 431** **JP-A- 11 191 431**
**JP-A- 2001 023 687** **JP-A- 2001 102 088**
**JP-A- 2001 217 001** **JP-A- 2001 217 155**
**JP-A- 2001 217 156**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 329 974 B1

## Description

Technical Field

The present invention relates to an additive that is added to a non-aqueous electrolyte of a non-aqueous electrolyte secondary cell, a non-aqueous electrolyte electric double layer capacitor or the like. More particularly, the present invention relates to a non-aqueous electrolyte secondary cell and a non-aqueous electrolyte electric double layer capacitor comprising the additive for a non-aqueous electrolyte that are excellent in deterioration resistance and incombustibility.

Background Art

Conventionally, nickel-cadmium cells have been the main cells used as secondary cells for memory-backup or sources for driving AV (Audio Visual) and information devices, particularly personal computers, VTRs (video tape recorders) and the like. Lately, non-aqueous electrolyte secondary cells have been drawing a lot of attention as a replacement for the nickel-cadmium cells because non-aqueous electrolyte secondary cells have advantages of high voltage, high energy concentration, and displaying excellent self-dischargeability. Various developments of the non-aqueous electrolyte secondary cells have been performed and a portion of these developments has been commercialized. For example, more than half of notebook type personal computers, cellular phones and the like are driven by the non-aqueous electrolyte secondary cells.
Carbon is often used as a negative electrode material in the non-aqueous electrolyte secondary cells, and various organic solvents are used as electrolytes in order to mitigate the risk when lithium is produced on the surface of negative electrode, and to increase outputs of driven voltages. Further, particularly in non-aqueous electrolyte secondary cells for use in cameras, alkali metals (especially, lithium metals or lithium alloys) are used as the negative electrode materials, and aprotic organic solvents such as ester organic solvents are ordinarily used as the electrolytes.
The non-aqueous electrolyte secondary cell exhibits high performance but does not exhibit sufficient safety.
First, alkali metals (especially, lithium metals or alloys) that are used as negative electrode materials for the non-aqueous electrolyte secondary cells are extremely highly-active with respect to water. Therefore, for example, when the non-aqueous electrolyte secondary cell is imperfectly sealed, and water enters therein, a problem occurs in that negative electrode materials and water are reacted with each other, whereby hydrogen is generated to ignite the cell. Further, since a lithium metal has a low melting point (about 170°C), when a large current is suddenly flown into a cell during a short circuit or the like, and an excessive amount of heat is generated, an extremely high danger occurs in which the cell is molten or the like. Moreover, due to the generation of heat, when the electrolyte is evaporated or decomposed to generate gas, a danger occurs in which the cell is exploded and ignited.
In order to solve the aforementioned problems, when temperature ascends and pressure inside the cell rises during the short circuit or overcharge of a cylindrical cell, for example, a method having a mechanism in which an excessive amount of current is prevented from flowing into the cylindrical cell by a break of electrode terminals at the same time when the safety valve is operated (Nikkan Kogyo Shinbun, Electronic Technology, Vol. 39, No. 9, 1997).
However, the mechanism does not operate necessarily normally all the time. When the mechanism does not operate normally, a possibility of danger still remains in which more heat is generated by the excessive amount of current to cause the cell to be ignited.
Thus, development of an excellent non-aqueous electrolyte secondary cell has been required which can fundamentally minimize risks such as evaporation, decomposition, and ignition of the electrolyte, without relying upon the safety mechanism such as the safety valve. Namely, development has been a high demand of a non-aqueous electrolyte secondary cell in which excellent stability and electrochemical characteristics which are the same as those of a conventional non-aqueous electrolyte secondary cell can be secured, and which exhibits good resistance to deterioration, good incombustibility, and accordingly is significantly high in safety.
On the other hand, instead of cells, non-aqueous electrolyte electric double layer capacitors have been in the spotlight as a new energy storage product that is kind to global environment.
The non-aqueous electrolyte electric double layer capacitors are condensers used for storing backup power supplies and auxiliary power supplies as well as various energies, and using electric double layers formed between polarizable electrodes and electrolytes. The non-aqueous electrolyte electric double layer capacitor is a product that has been developed and commercialized in the 1970s, has been at its infancy in the 1980s, and has grown and evolved since the 1990s.
The electric double layer capacitor is different from a cell in which a cycle of an oxidation-reduction reaction accompanied by substance movements is a charging/discharging cycle in that a cycle for electrically absorbing, on electrode surfaces, ions from electrolytes is a charging/discharging cycle. For this reason, the electric double layer capacitor is more excellent in instant charging/discharging properties than those of a cell. Repeatedly charging/discharging the capacitor does not deteriorate the instant charging/ discharging properties. Further, in the electric double layer capacitor, since excessive charging/discharging voltage does not occur during charging/discharging, simple and less expensive electric circuits suffice for the capacitor. Moreover, the capacitor has more merits than the cell from the viewpoints that it is easy to know a remaining capacitance in the capacitor, and the capacitor has endurance under conditions of a wide range of temperature of from -30 °C to 90 °C, and the capacitor is pollution-free.

The electric double layer capacitor is an energy storage device comprising positive and negative polarizable electrodes and electrolytes. At the interface at which the polarizable electrodes and the electrolytes come into contact with each other, positive and negative electric charges are arranged so as to face one another and be separated from one another by an extremely short distance to thereby form an electric double layer. The electrolytes play a role as ion sources for forming the electric double layer. Thus, in the same manner as for the polarizable electrodes, the electrolytes are an essential substance for controlling fundamental properties of the energy storage device.

As the electrolytes, aqueous-electrolytes, non-aqueous electrolytes, or solid electrolytes are conventionally known. However, from a viewpoint of improvement of energy concentration of the electric double layer capacitor, the non-aqueous electrolyte in which a high operating voltage is enabled has particularly been in the spotlight, and practical use thereof is progressing.

A non-aqueous electrolyte is now put to practical use in which solutes such as $(C_2H_5)_4P \cdot BF_4$ and $(C_2H_5)_4N \cdot BF_4$ were dissolved in highly dielectric solvents such as carbonic acid carbonates (e.g., ethylene carbonate and propylene carbonate), γ-butyrolactone, and the like.

However, these non-aqueous electrolytes have a problem with safety in the same manner as those of the secondary cells. Namely, when a non-aqueous electrolyte electric double layer capacitor is heated and ignited, an electrolyte catches fire, and flames are combusted to spread over the surfaces thereof, resulting in a high risk. As the non-aqueous electrolyte electric double layer capacitor generates heat, the non-aqueous electrolyte that uses the organic solvent as a base is evaporated or decomposed to generate gas. Due to the generated gas, explosion or ignition occurs on the non-aqueous electrolyte electric double layer capacitor, an electrolyte is ignited to catch fire, and flames are combusted to spread over the surfaces thereof, resulting in a high risk.

Therefore, development has been required of non-aqueous electrolyte electric double layer capacitors in which a danger such as explosion or ignition due to evaporation and decomposition of non-aqueous electrolytes are minimized, and which are significantly high in safety.

Lately, as the practical use of the non-aqueous electrolyte electric double layer capacitors has been developed, application thereof to electromobiles, hybrid cars, or the like has been expected, whereby a requirement for safety of the capacitors has been increasing more and more.

Accordingly, there has been a high demand for a non-aqueous electrolyte electric double layer capacitor comprising various excellent characteristics such as incombustibility (that is superior to a characteristic such as self-extinguishability or flame retardancy in which flames are hard to be ignited and spread), deterioration resistance, and extremely high safety.

Document WO 97/44842 describes a battery comprising an electrolyte which includes a component which generates a fire-retardant gas upon the composition, the electrolyte including a cyclophosphazene having the following structure

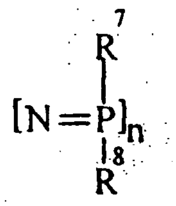

wherein n is an integer from 3 to 6 and $R^7$ and $R^8$ are independently selected from the group consisting of hydrogen, halogen and $-OR^9$ wherein $R^9$ is $C_1$-$C_6$ alkyl terminally substituted with O to 3 halogen atoms and containing 0 to 3 ether linkages, with the proviso that when one of $R^7$ or $R^8$ is - $OR^9$, the other is halogen.

Disclosure of Invention

It is an object of the present invention to solve the conventional problems described above, and meet various needs. Namely, the present invention provides a non-aqueous electrolyte secondary cell according to claim 1 and a non-aqueous electrolyte electric double layer capacitor according to claim 8. Embodiments of the invention are referred to with the appended dependent claims. The non-aqueous electrolyte comprises an additive for a non-aqueous electrolyte

that is added to a non-aqueous electrolyte of an energy storage device such as a non-aqueous electrolyte secondary cell. Addition of the additive for a non-aqueous electrolyte makes it possible to manufacture a non-aqueous electrolyte energy storage device, without causing damage to the performance of the device, that exhibits good resistance to deterioration, good incombustibility, and accordingly is significantly high in safety. The non-aqueous electrolyte comprising the additive for a non-aqueous electrolyte has low interface resistance, and accordingly exhibits excellent low temperature characteristics. Further, the present invention provides a non-aqueous electrolyte secondary cell and a non-aqueous electrolyte electric double layer capacitor comprising the additive for a non-aqueous electrolyte that exhibit good low temperature characteristics, good resistance to deterioration, and good incombustibility, and accordingly are significantly high in safety.

Means for solving the above-described problems are described below:
The devices of the present invention comprise an aqueous electrolyte including an additive for a non-aqueous electrolyte comprising a phosphazene derivative represented by the following formula (1):

$$(PNR_2)_n \cdots\cdots\cdots \qquad \text{formula (1)}$$

wherein n is 3, four of the R groups are fluorine, and two of the R groups are fluorine containing methoxy substituents.

Further, the present invention provides a non-aqueous electrolyte secondary cell comprising a non-aqueous electrolyte including the additive for a non-aqueous electrolyte comprising the phosphazene derivative represented by formula (1) and a supporting salt; a positive electrode; and a negative electrode.

Moreover, the present invention provides a non-aqueous electrolyte electric double layer capacitor comprising a non-aqueous electrolyte including the additive for a non-aqueous electrolyte comprising the phosphazene derivative represented by formula (1) and a supporting salt; a positive electrode; and a negative electrode.

Best Mode for Carrying Out the Invention

A more detailed description of the present invention will be made hereinafter. In the following reference is made to several examples of secondary cells, electric double layer capacitors, non-aqueous electrolytes and additives therefor. These examples are useful to understand the invention. However, embodiments of the invention are those falling within the scope of the appended claims.

[An additive for a non-aqueous electrolyte]

An additive for a non-aqueous electrolyte of the present invention contains therein a phosphazene derivative and, if necessary, other component:

-A phosphazene derivative-

A phosphazene derivative is contained in the non-aqueous electrolyte for obtaining the effects described below.

It is considered that aprotic organic solvent-based electrolytes of a conventional non-aqueous electrolyte secondary cell used for an energy storage device is highly dangerous for the following reason. When a large current is rapidly flown into the electrolyte during a short circuit or the like, and the cell generates an excessive amount of heat, the electrolyte is evaporated or decomposed to generate gas. The generated gas may cause the cell to be exploded or ignited, resulting in a high danger.

The addition of the additive for a non-aqueous electrolyte to the conventional non-aqueous electrolytes provide the non-aqueous electrolyte with excellent incombustibility due to action of nitrogen gas or fluorine gas induced from the phosphazene derivative. Accordingly, safety of the non-aqueous electrolyte energy storage device containing therein the additive for a non-aqueous electrolyte sharply improves. Further, phosphorus contained in the phosphazene derivative acts to suppress chain-decomposition of high polymer materials for forming a part of a cell. Consequently, the non-aqueous electrolyte exhibits incombustibility more effectively.

In addition, the aforementioned "safety" can be evaluated by the following evaluation method of safety

<Evaluation method of Safety>

Safety is evaluated according to a method in which an UL94HB method of UL (Under Lighting Laboratory) standards is modified. Namely, a combustion behavior of flame (test flame: 800°C, for 30 seconds) ignited in an ambient air is measured. More specifically, on the basis of UL test standards, various electrolytes (1.0 ml) were impregnated in inflammable quarts fibers. Test pieces (127mm×12.7mm) were prepared. Ignitability (flame height), combustibility, formation of carbide, and phenomenon during a secondary ignition of these test flames were observed. If a test piece

was not ignited, the non-aqueous electrolyte was evaluated to have "high safety".

In a conventional non-aqueous electrolyte energy storage device, it is considered that compounds generated due to decomposition or reaction of the electrolyte or the supporting salt in the non-aqueous electrolyte cause electrodes and peripheral materials of the electrodes to corrode. Or it is also considered that, since the amount of the supporting salt itself decreases due to the decomposition or the reaction, electric characteristics are damaged, resulting in deterioration of the performance of the capacitor. For example, in ester-based electrolytes as electrolytes of a conventional non-aqueous electrolyte secondary cell, it is considered that corrosion of the secondary cell occurs and proceeds due to a $PF_5$ gas generated when, for example, a lithium ion source such as an $LiPF_6$ salt as a supporting salt decomposes into LiF and $PF_5$ as time goes by, or due to a hydrogen fluoride gas that is generated when the generated $PF_5$ gas further reacts with water or the like. Thus, a phenomenon in which not only conductivity of the non-aqueous electrolyte deteriorates, but also electrode materials deteriorate due to the generation of the hydrogen fluoride gas.

On the other hand, the phosphazene derivative contributes to suppress decomposition or reaction of a lithium ion source such as the $LiPF_6$ and stabilize the same (the phosphazene derivative works especially for $PF_6$). Accordingly, the addition of the phosphazene derivative to a conventional non-aqueous electrolyte can suppress decomposition reaction of the non-aqueous electrolyte, thus enabling corrosion or deterioration of the non-aqueous electrolyte to be suppressed.

--Molecular Structure-

The phosphazene derivative is represented by the following formula (1):

$(PNR_2)_n$ ·········· formula (1)

wherein R represents a fluorine-containing substituent or fluorine, at least one of all R's is a fluorine-containing substituent, and n represents 3 to 14.

The phosphazene derivative represented by formula (1) is employed for the reason described below:
If a non-aqueous electrolyte comprises the phosphazene derivative, the non-aqueous electrolyte can be provided with excellent self-extinguishability or flame retardancy. However, further, if the phosphazene derivative is represented by formula (1) in which at least one of all R's is a fluorine-containing substituent, the non-aqueous electrolyte can be provided with excellent incombustibility. Furthermore, if at least one of all R's is fluorine in formula (1), the non-aqueous electrolyte can be provided with more excellent incombustibility.

In the "Evaluation method of safety", "incombustibility" refers to a characteristic in which, when a test flame is added to a non-aqueous electrolyte, the non-aqueous electrolyte is never ignited, i.e., a characteristic in which the test flame does not ignite a test piece (flame height: 0 mm).

In the "Evaluation method of safety", "self-extinguishability" refers to a characteristic in which ignited flame extinguishes at a 25 to 100 mm-height of flame line and enters a state in which no ignition of fallen residues is found. In the "Evaluation method of Safety", "flame retardancy" refers to a characteristic in which the ignited flame does not reach a 25 mm-height of flame line and enters a state in which no ignition of fallen residues is found.

Besides an alkoxy group, examples of substituents in formula (1) include an alkyl group, an acyl group, an aryl group, and a carboxyl group. The alkoxy group is preferable because the non-aqueous electrolyte exhibits particularly excellent incombustibility..

Examples of the alkoxy group include: a methoxy group, an ethoxy group, a phenoxy group, and an alkoxy group substituted alkoxy group such as a methoxyethoxy group. The methoxy group, the ethoxy group, and the phenoxy group are preferable because the non-aqueous electrolyte exhibits particularly excellent incombustibility. Further, the methoxy group, which is able to lower the viscosity of a non-aqueous electrolyte, is preferable.

In formula (1), it is preferable that n is 3 to 14 because the non-aqueous electrolyte can exhibit excellent incombustibility. When n is 3, it is preferable that at least one of all R's is fluorine and at least another one of all the R's is an alkoxy group or a phenoxy group. When n is 4 to 14, it is preferable that at least one of all R's is fluorine.

In formula (1), when all R's are either alkoxy groups or phenoxy groups, it is not preferable because the non-aqueous electrolyte exhibits flame retardancy but does not exhibit incombustibility described above. Further, when n is 3 and all R's are fluorine, the phosphazene derivative itself is incombustible. However, since the phosphazene derivative has very low boiling point, when a flame approaches thereto, the phosphazene derivative is rapidly volatilized. This is not preferable. In this case, the remaining aprotic organic solvent or the like of the phosphazene derivative is ignited. When n is 4 or more, the boiling point of the phosphazene derivative is high, whereby excellent effects due to incombustibility can be exerted. n is appropriately selectable for a purpose of use.

The content of the fluorine in a phosphazene derivative is preferably 3 to 70 wt%, and more preferably 7 to 45 wt%.

As long as the content is within a range of the aforementioned wt%, "incombustibility" which is an inherent effect of the present invention can be exhibited particularly preferably.

Besides the aforementioned fluorine, the molecular structure of the phosphazene derivative may contain therein a halogen element such as chlorine or bromine. Further, in a compound including substituents containing therein a halogen element, there is often caused a problem with the formation of halogen radicals. However, the phosphazene derivative of the present invention does not cause such a problem because a phosphorus element in its molecular structure captures a halogen radical to thereby form a stable halogenated phosphorus.

A proper selection of R and n value in formula (1) makes it possible to synthesize non-aqueous electrolytes having more preferable incombustibility, viscosity, and solubility which is appropriate for mixture. These phosphazene derivatives can be used singly or in combination.

--Flash point--

Flash point of the phosphazene derivative is not particularly limited. However, from a viewpoint of suppression of ignition or the like, the flash point of the phosphazene derivative is preferably 100°C or more, and more preferably 150°C or more.

If the flash point of the phosphazene derivative is 100°C or more, ignition or the like can be suppressed. Further, even if ignition or the like occurs inside the energy storage device, ignition of the device and spreading of the flame over the surface of the electrolyte thus leading to a danger can be reduced.

The "flash point" specifically refers to a temperature at which flame spreads over the surface of a substance and covers 75% thereof. The flash point can be a criterion to see a tendency at which a mixture that is combustible with air is formed. In the present invention, a value measured by a "Mini-flash" method described below is used. Namely, an apparatus (i.e., an automatic ignition measuring device, MINIFLASH manufactured by GRABNER INSTRUMENTS Inc.) comprising a small measuring chamber (4 ml), a heating cup, a flame, an ignition portion and an automatic flame sensing system is prepared in a sealed cup method. A sample to be measured (1 ml) was put into the heating cup. This heating cup is covered with a cover. The heating cup is heated from the upper portion of the cover. Hereinafter, the temperature of the sample is arisen at a constant interval, a mixture of vapor and air in the cup is ignited at a constant interval of temperature, and ignition is detected. The temperature when ignition is detected is regarded as a flash point.

It is preferable that the additive for a non-aqueous electrolyte of the present invention is added to the non-aqueous electrolyte in an amount which is equal to a preferable range of values of the content of the phosphazene derivative in a non-aqueous electrolyte secondary cell or a non-aqueous electrolyte electric double layer capacitor which will be described below. By limiting the amount of the additive of the present invention to the aforementioned range of values, the present invention preferably provides the effects such as incombustibility, deterioration resistance and the like.

As described above, in accordance with the present invention, addition of the additive for a non-aqueous electrolyte described above to a non-aqueous electrolyte energy storage device makes it possible to manufacture a non-aqueous electrolyte energy storage device, while maintaining electrical characteristics required for the device, which exhibits good resistance to deterioration, good low interface resistance at the non-aqueous electrolyte, and which is excellent in low temperature characteristics and incombustibility, and accordingly is significantly high in safety.

<<A non-aqueous electrolyte energy storage device>>

[Non-aqueous electrolyte secondary cells]

The non-aqueous electrolyte secondary cell of the present invention comprises a positive electrode, a negative electrode, and a non-aqueous electrolyte, and, if necessary, other member.

-Positive electrode-

Materials for positive electrodes are not particularly limited, and can be appropriately selected from any known positive electrode materials, and used. Preferable examples of positive electrode materials include: metal oxides such as $V_2O_5$, $V_6O_{13}$, $MnO_2$, $MoO_3$, $LiCoO_2$, $LiNiO_2$, and $LiMn_2O_4$; metal sulfides such as $TiS_2$ and $MoS_2$; and conductive polymers such as polyaniline. Among these, $LiCoO_2$, $LiNiO_2$ and $LiMn_2O_4$ are preferable because they are safe, have high capacity, and are excellent in wettability with respect to electrolytes. The materials can be used alone or in combination.

Configurations of the positive electrodes are not particularly limited, and can preferably be selected from known configurations as electrodes, such as sheet, cylindrical, plate and spiral-shaped configurations.

-Negative electrode-

Materials for a negative electrode are not particularly limited as long as they can absorb and discharge lithium

or lithium ions. The negative electrode can be selected appropriately from known negative electrode materials, and used. Preferable examples of negative electrode materials include those containing lithium therein such as lithium metal itself; alloys of lithium and aluminum, indium, lead or zinc; and a carbon material such as lithium-doped graphite. Among these materials, a carbon material such as graphite is preferable from the viewpoint of high safety. These materials can be used alone or in combination.

Configuration of the negative electrode is not particularly limited, and can appropriately be selected from known configurations in the same manner as those of the above-described positive electrodes.

-Non-aqueous electrolyte-

A non-aqueous electrolyte contains the additive for the non-aqueous electrolyte secondary cell of the present invention and a supporting salt and, and if necessary, other component.

--Supporting salt--

As a supporting salt, ion sources of lithium ions are preferable. ion sources of the lithium ions such as $LiClO_4$, $LiBF_4$, $LiPF_6$, $LiCF_3SO_3$, $LiAsF_6$, $LiC_4F_9SO_3$, $Li(CF_3SO_2)_2N$, and $Li(C_2F_5SO_2)_2N$ can preferably be used. These can be used singly or in combination.

An amount in which the supporting salt is mixed in the non-aqueous electrolyte (composition of solvent)(1 kg) is preferably 0.2 to 1 mol, and more preferably 0.5 to 1 mol.

If the amount in which the supporting salt is contained in the non-aqueous electrolyte is less than 0.2 mol, sufficient conductivity of the non-aqueous electrolyte cannot be secured. Therefore, a case may be caused in which charging/ discharging characteristics of cells are damaged. Meanwhile, if the amount in which the supporting salt is contained in the non-aqueous electrolyte is more than 1 mol, viscosity of the non-aqueous electrolytes increases, sufficient mobility of the lithium ion or the like cannot be secured, and sufficient conductivity of the non-aqueous electrolytes cannot be secured as in the above-description. Therefore, a case may be caused in which charging/ discharging characteristics of the cells are damaged.

--Additive for a non-aqueous electrolyte secondary cell--

An additive for a non-aqueous electrolyte is the same as that of the description in the paragraph of the additive for a non-aqueous electrolyte of the present invention, and contains therein the phosphazene derivative.

-- Viscosity--

Viscosity of a non-aqueous electrolyte at 25°C is preferably 10mPa·s (10cP) or less, and most preferably 5mPa·s (5cP) or less.

If the viscosity is 10mPa·s (10cP) or less, a non-aqueous electrolyte secondary cell has excellent cell properties such as low internal resistance, high conductivity and the like.

Viscosity was measured for 120 minutes at each of rotational speeds of 1rpm, 2rpm, 3rpm, 5rpm, 7rpm, 10rpm, 20rpm and 50rpm by a viscometer (product name: R-type viscometer Model RE500-SL, manufactured by Toki Sangyo K.K.) and determined on the basis of the rotational speed as an analysis condition at which the value indicated by the viscometer reached 50 to 60%.

--Content--

Depending upon the effects to be obtained by containing the phosphazene derivative, the content of the phosphazene derivative in the non-aqueous electrolyte is classified into two types of contents, namely, a first content capable of providing the non-aqueous electrolyte with excellent "incombustibility", and a second content capable of preferably providing the non-aqueous electrolyte with good resistance to deterioration.

From the viewpoint of providing the non-aqueous electrolyte with excellent "incombustibility", the first content of the phosphazene derivative in the non-aqueous electrolyte is preferably 10 vol% or more, and more preferably 15 vol% or more.

When the first content is less than 10 vol %, the non-aqueous electrolyte cannot exhibit sufficient "incombustibility".

From the viewpoint of "incombustibility", a non-aqueous electrolyte containing therein a cyclic phosphazene derivative, $LiPF_6$, ethylene carbonate and/or propylene carbonate, and a non-aqueous electrolyte containing therein the cyclic phosphazene derivative, $LiCF_3SO_3$, and propylene carbonate are particularly preferable. In these non-aqueous

electrolytes, in spite of the above-description, even if the content of the phosphazene derivative in the non-aqueous electrolyte is small, the non-aqueous electrolyte exhibits an effect of excellent "incombustibility". Namely, the content of the cyclic phosphazene derivative in the non-aqueous electrolyte is preferably 5 vol % or more in order to make the non-aqueous electrolyte exhibit "incombustibility".

From a viewpoint in which the non-aqueous electrolyte can preferably exhibit "deterioration resistance", the second content of the phosphazene derivative in the non-aqueous electrolyte is preferably 2 vol % or more, and more preferably 2 to 75 vol %.

As long as the second content is within the aforementioned range of values, deterioration can preferably be suppressed.

In order to satisfy both deterioration resistance and incombustibility at high level, the content of the phosphazene derivative in the non-aqueous electrolyte is preferably 10 to 75 vol %, and more preferably 15 to 75 vol %.

"Deterioration" refers to a decomposition of the supporting salt (e.g., lithium salt), and effects due to the prevention of deterioration were evaluated by an evaluation method of stability described below.

(1) First, the non-aqueous electrolyte containing a supporting salt was prepared. Then, moisture content of this electrolyte was measured. Concentration of a hydrogen fluoride in the non-aqueous electrolyte was measured by a high-speed liquid chromatography (ion chromatography). Further, after hues of the non-aqueous electrolyte were visually observed, charging/discharging capacity (mAh/g) was calculated by a charging/discharging test.

(2) After the non-aqueous electrolyte was left in a gloved box for 2 months. Thereafter, moisture content and concentration of a hydrogen fluoride were measured again, hues were observed, and charging/ discharging capacity (mAh/g) was calculated. On the basis of variations of the obtained values, stability of the non-aqueous electrolyte was evaluated.

-Other Components-

As other components, an aprotic organic solvent and the like are particularly preferable in respect of safety.

By containing the aprotic organic solvent in the non-aqueous electrolyte, it is facilitated to lower the viscosity of the non-aqueous electrolyte and to increase the electric conductivity thereof.

The aprotic organic solvents are not particularly limited. However, from the viewpoint of the lowering of viscosity of the non-aqueous electrolyte, ether compounds and ester compounds can be used, and specific examples thereof include: 1,2-dimethoxyethane, tetrahydrofuran, dimethyl carbonate, diethyl carbonate, diphenyl carbonate, ethylene carbonate, propylene carbonate, $\gamma$-butyrolactone, $\gamma$-valerolactone, and methylethyl carbonate.

Among these, cyclic ester compounds such as ethylene carbonate, propylene carbonate, and $\gamma$-butyrolactone, chain ester compounds such as 1,2-dimethoxyethane, dimethyl carbonate, ethylmethyl carbonate, and diethyl carbonate are preferable. The cyclic ester compounds are particularly preferable in that they have high relative dielectric constants and excellent solubility with respect to lithium salts or the like. And it is preferable that, since the chain ester compounds have low viscosity, they can lower viscosity of the non-aqueous electrolyte. These can be used singly, but use of two or more thereof in combination is preferable.

--Viscosity of an aprotic organic solvent--

Viscosity of the aprotic organic solvent at 25°C is preferably 10mPa·s (10cP) or less, and more preferably 5mPa·s (5cP) or less in order to easily lower the viscosity of the non-aqueous electrolyte.

-Other materials-

As other materials, a separator that is interposed between negative electrodes and positive electrodes in order to prevent a short circuit of electric currents by both the negative electrodes and positive electrodes contacting to each other, and known materials generally used in cells are preferably used.

It is preferable to use materials for separators that include materials in which both electrodes can reliably be prevented from contacting each other and electrolytes can be contained or flown therethrough. Examples of the materials include: synthetic resin non-woven fabrics such as polytetrafluoroethylene, polypropylene, and polyethylene, thin film layers, and the like. Among these, use of a micro-porous polypropylene or polyethylene film having a thickness of from 20 to 50 $\mu$m is particularly preferable.

<Capacity of a non-aqueous electrolyte secondary cell>

As a capacity of a non-aqueous electrolyte secondary cell, with $LiCoO_2$ as a negative electrode, the capacity

of the non-aqueous electrolyte secondary cell is preferably 140 to 145 (mAh/g), and more preferably 143 to 145 (mAh/g) in a charging/discharging capacity (mAh/g).

A known method is used for measuring the charging/discharging capacity, such as the one in which a charging/discharging test is carried out by using a semi-open type cell or a closed type coin cell (See Masaaki Yoshio, "Lithium ion secondary cell" published by Nikkan Kogyo Shinbun-sha), whereby a capacity is determined by charging current (mA), time (t) and weight of an electrode material (g).

<Shape of a non-aqueous electrolyte secondary cell>

The shape of a non-aqueous electrolyte secondary cell is not particularly limited and is suitably formed into various known configurations such as a coin-type cell, a button-type cell, a paper-type cell, a square-type cell and a cylindrical cell having a spiral structure.

In the case of the spiral structure, a sheet type negative electrode is prepared to sandwich a collector, and a (sheet type) positive electrode is superimposed on this, and rolled up, whereby a non-aqueous electrolyte secondary cell can be prepared.

<Performance of a non-aqueous electrolyte secondary cell>

The non-aqueous electrolyte secondary cell of the present invention exhibits good resistance to deterioration, good low interface resistance at the non-aqueous electrolyte, and is excellent in low-temperature characteristics and incombustibility, and accordingly is significantly high in safety.

[Non-aqueous electrolyte electric double layer capacitor]

The non-aqueous electrolyte electric double layer capacitor of the present invention comprises a negative electrode, a positive electrode, a non-aqueous electrolyte, and other materials if necessary.

--Positive electrode--

Materials for positive electrodes of non-aqueous electrolyte electric double layer capacitors are not particularly limited. However, use of carbon based-polarizable electrodes is generally preferable. As the polarizable electrodes, it is preferable to use electrodes in which specific surface and/or bulk concentration thereof are large, which are electrochemically inactive, and which have a small resistance.

The polarizable electrodes are not particularly limited. However, the polarizable electrodes generally contain activated carbons, and other components such as conductive agents or binders if necessary.

-Activated carbons-

Raw materials for activated carbons are not particularly limited, and generally contain other components such as various types of heat-resistant resins, pitches, and the like, than phenol resins.

Preferable examples of the heat-resistant resins include: polyimide, polyamide, polyamideimide, polyetherimide, polyether, polyetherketone, bismaleicimidetriadine, aramide, fuluoroethylene resin, polyphenylene, polyphenylene sulphide, and the like. These can be used singly or two or more thereof in combination.

As the shapes of activated carbons used for the positive electrodes, they are preferably formed into powders, fibers, and the like in order to increase the specific surface area of the electrode and increase the charging capacity of the non-aqueous electrolyte electric double layer capacitor.

Further, these activated carbons may be subjected to a heat treatment, a drawing treatment, a vacuum treatment at high temperature, and a rolling treatment for a purpose to increase the charging capacity of the non-aqueous electrolyte electric double layer capacitor.

--Other components (conductive agents and binders)--

The conductive agents are not particularly limited, but graphite and acetylene black and the like can be used.

Materials of the binders are not particularly limited, but resins such as polyvinylidene fluoride and tetrafluoroethylene can be used.

-Negative electrodes-

As negative electrodes, polarizable electrodes which are the same as those of the positive electrodes be used.

--Non-aqueous electrolyte--

The non-aqueous electrolyte contains an additive for the non-aqueous electrolyte electric double layer capacitor, a supporting salt, and other components if necessary.

--Supporting salt--

A supporting salt can be selected from those that are conventionally known. However, use of a quaternary ammonium salt, which can provides excellent electric characteristics such as electric conductivity and the like in the non-aqueous electrolyte, is preferable.

The quaternary ammonium salt is required to be a quaternary ammonium salt that is able to form a multivalent ion, in that the quaternary ammonium salt is a solute which acts as an ion source for forming an electric double layer, and is also able to effectively improve electric characteristics such as electric conductivity of the non-aqueous electrolyte.

Examples of the quaternary ammonium salts include: $(CH_3)_4N\text{-}BF_4$, $(CH_3)_3C_2H_5N\cdot BF_4$, $(CH_3)_2(C_2H_5)_2N\cdot BF_4$, $CH_3(C_2H_5)_3N\cdot BF_4$, $(C_2H_5)_4N\cdot BF_4$, $(C_3H_7)_4N\cdot BF_4$, $CH_3(C_4H_9)_3N\cdot BF_4$, $(C_4H_9)_4N\cdot BF_4$, $(C_6H_{13})_4N\cdot BF_4$, $(C_2H_5)_4N\cdot ClO_4$, $(C_2H_5)_4N\cdot BF_4$, $(C_2H_5)_4N\cdot PF_6$, $(C_2H_5)_4N\cdot AsF_6$, $(C_2H_5)_4N\cdot SbF_6$, $(C_2H_5)_4N\cdot CF_3SO_3$, $(C_2H_5)_4N\cdot C_4F_9SO_3$, $(C_2H_5)_4N\cdot(CF_3SO_2)_2N$, $(C_2H_5)_4N\cdot BCH_3(C_2H_5)_3$, $(C_2H_5)_4N\cdot B(C_2H_5)_4$, $(C_2H_5)_4N\cdot B(C_4H_9)_4$, $(C_2H_5)_4N\cdot B(C_6H_5)_4$ and the like. Further, a hexafluorophosphoric acid of the quaternary ammonium salt may be used. Moreover, solubility can be improved by increasing polarizability. Therefore, a quaternary ammonium salt can be used in which different alkyl groups are bonded to an N atom.

Examples of the quaternary ammonium salt include compounds represented by the following structural formulae (1) to (10):

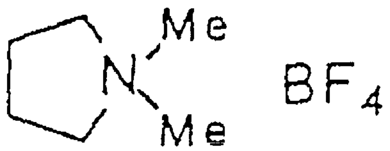

Structural formula (1)

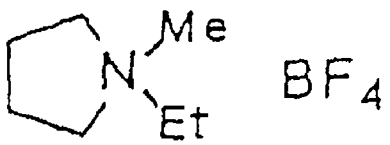

Structural formula (2)

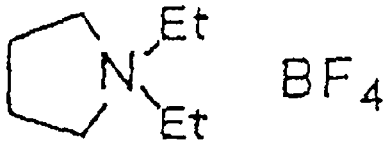

Structural formula (3)

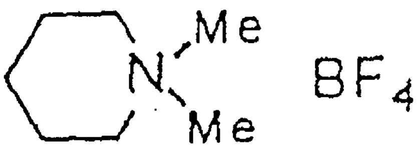

Structural formula (4)

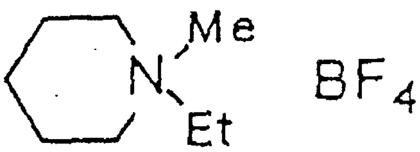

Structural formula (5)

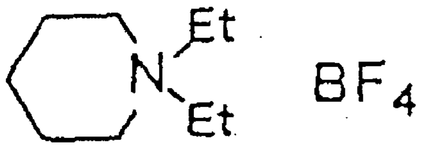

Structural formula (6)

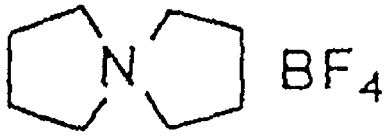

Structural formula (7)

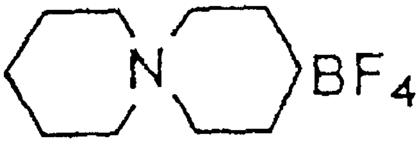

Structural formula (8)

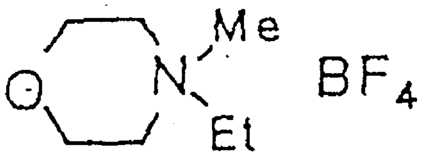

Structural formula (9)

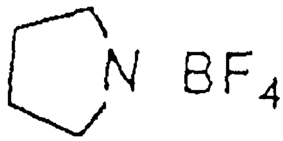

Structural formula (10)

In the above-described structural formulae, Me represents a methyl group, and Et represents an ethyl group.

Of these quaternary ammonium salts, salts which are able to generate $(CH_3)_4N^+$ or $(C_2H_5)_4N^+$ as positive ions are preferable in that high electric conductivity can be secured. Further, salts which are able to generate negative ions whose format weight is small are preferable.

These quaternary ammonium salts can be used singly or two or more thereof in combination.

The amount in which the supporting salt is mixed with 1kg of the non-aqueous electrolyte (composition of solvent) is preferably 0.2 to 1.5 mol, and more preferably 0.5 to 1.0 mol.

If the amount of mixture is less than 0.2 mol, there is a case in which electric characteristics such as sufficient electric conductivity of the non-aqueous electrolyte can be secured. On the other hand, if the amount of mixture exceeds 1.5 mol, there is a case in which viscosity of the non-aqueous electrolyte increases and electric characteristics such as electric conductivity deteriorate.

-Additive for a non-aqueous electrolyte-

The additive for a non-aqueous electrolyte is the same as that described in the paragraph of "An additive for a non-aqueous electrolyte" of the present invention, and contains therein the phosphazene derivative.

-- Viscosity--

The viscosity is the same as that described in the paragraph of "Viscosity" of a non-aqueous electrolyte of the non-aqueous electrolyte secondary cell.

--Content--

The content is the same as that described in the paragraph of "Content" of a non-aqueous electrolyte of the non-aqueous electrolyte secondary cell. However, in evaluating the effects due to prevention of deterioration, charging/discharging capacity was calculated in the secondary cell, while internal resistance was calculated in the electric double layer capacitor.

--Other components--

"Other components" are the same as those described in the paragraph of the "Other components" of the non-aqueous electrolyte of the non-aqueous electrolyte secondary cell.

--Viscosity of an aprotic organic solvent--

"Viscosity" is the same as that described in the paragraph of the "Viscosity of an aprotic organic solvent" of the non-aqueous electrolyte of the non-aqueous electrolyte secondary cell.

--Other materials--

As other materials, a separator, a collector, or a container can be used.

The separator is interposed between positive electrodes and negative electrodes in order to prevent short circuit of the non-aqueous electrolyte electric double layer capacitor. The separators are not particularly limited, and known separators are ordinarily used as the separators for the non-aqueous electrolyte electric double layer capacitor.

In the same manner as separators in the secondary cell, micro porous film, nonwoven fabrics, and paper are used. Specific examples of the material include synthetic resin non-woven fabrics such as polytetrafluoroethylene, polypropylene, and polyethylene, thin film layers, and the like. Among these, use of a micro-porous polypropylene or polyethylene film having a thickness of from 20 to 50 μm is particularly preferable.

Collectors are not particularly limited, and known collectors which are ordinarily used for non-aqueous electrolyte electric double layer capacitors are preferably used. Collectors are preferable which have excellent electrochemical corrosion resistance, chemical corrosion, workabilty, and mechanical strength, and which can be manufactured inexpensively, and preferable examples thereof include aluminum, stainless steel, conductive resins, and the like.

Containers are not particularly limited, and known containers for the non-aqueous electrolyte electric double layer capacitors are preferably used.

Materials such as aluminum, stainless steel, conductive resin and the like are preferably used for the containers.

Besides the separators, the collectors and the containers, as other members, individual known members which are ordinarily used for non-aqueous electrolyte electric double layer capacitors are preferably used.

<Internal resistance of a non-aqueous electrolyte electric double layer capacitor>

An internal resistance (Ω) of the non-aqueous electrolyte electric double layer capacitor is preferably 0.1 to 0.3 (Ω), and more preferably 0.1 to 0.25 (Ω).

The internal resistance can be obtained by a known method such as a method described below in which internal resistance is measured. Namely, when the non-aqueous electrolyte electric double layer capacitor was made, and charging/discharging curves were measured, the internal resistance can be determined by measuring a deflection width of potentials in association with charging rest or discharging rest.

<Configurations and use of a non-aqueous electrolyte electric double layer capacitor>

Configurations of the non-aqueous electrolyte electric double layer capacitors are not particularly limited, and the capacitors are preferably formed into known configurations such as cylinder-type (cylindrical or square) or flat-type (coin).

The non-aqueous electrolyte electric double layer capacitors are preferably used for memory back-ups of various electronic devices, industrial apparatuses, and aeronautical apparatuses; electric magnetic holders for toys, cordless apparatuses, gas apparatuses, and instant boilers; and power supplies for clocks such as wrist watch, a wall clock, a solar clock, and an AGS (automatic gain stabilization) wrist watch.

<Performance of a non-aqueous electrolyte electric double layer capacitor>

The non-aqueous electrolyte electric double layer capacitor of the present invention, while maintaining electric characteristics such as sufficient electrical conductivity and the like, exhibits good resistance to deterioration, and good low interface resistance at the non-aqueous electrolyte, and is excellent in low-temperature characteristics and incombustibility, and accordingly is significantly high in safety.

EXAMPLES

With reference to Examples and Comparative Examples, a more detailed description of the present invention will be given hereinafter. Embodiments of the invention according to the appended claims are detailed in examples 1 to 3.

<<Non-aqueous electrolyte secondary cell>>

Example 1:

[Preparation of a non-aqueous electrolyte]

10 ml (10 vol%) of a phosphazene derivative (a cyclic phosphazene derivative represented by formula (1) in which n is 3, 4R's are fluorine, and 2R's are fluorine-containing methoxy groups; fluorine content in the phosphazene derivative is 50 wt %)(an additive for a non-aqueous electrolyte) was added to 90 ml of a mixed solvent of diethyl carbonate and ethylene carbonate (mixture ratio (i.e., volume ratio): diethyl carbonate/ethylene carbonate=1/1) (aprotic organic solvent). Further, $LiPF_6$ (supporting salt) was dissolved in this mixture at a concentration of 0.75 mol/kg, whereby a non-aqueous electrolyte (viscosity at 25°C: 4.2 mPa·s (4.2 cP); conductivity of 0.75 mol/l of a lithium salt dissolved solution: 6.5mS/cm) was prepared.

<Evaluation of incombustibility>

The obtained non-aqueous electrolyte was evaluated with respect to stability in the same manner as in the evaluation method of stability described later. Briefly, when a test flame was added to the non-aqueous electrolyte, if the test flame exhibited no ignition (flame height: 0 mm), the non-aqueous electrolyte was evaluated to be "incombustible". The results are shown in table 1.

<Evaluation of flame retardancy>

A case in which ignited flame did not reach a height of 25 mm in a device, and things dropped from a net were not ignited was evaluated to have flame retardancy.

<Evaluation of safety>

Safety is evaluated according to a method in which an UL94HB method of UL (Under Lighting Laboratory) standards is arranged. Namely, a combustion behavior of flame (test flame: 800°C, for 30 seconds) ignited in an ambient air is measured. More specifically, on the basis of UL test standards, various electrolytes (1.0 ml) were immersed in inflammable quarts fibers. Test pieces (127mm× 12.7mm) were prepared. Ignitability (flame height), combustibility, formation of carbide, and phenomenon during a secondary ignition of these test flames were observed. If a test piece was not ignited, the non-aqueous electrolyte was evaluated to have "high safety". The results are shown in table 1.

<Evaluation of deterioration>

Deterioration of the obtained non-aqueous electrolyte was evaluated in the same manner as the "Evaluation method of stability", by measuring and calculating moisture percentage (ppm), concentration of hydrogen fluoride (ppm), and charging/discharging capacity (mAh/g) of the non-aqueous electrolyte immediately after the non-aqueous electrolyte was prepared and after the non-aqueous electrolyte was left in a gloved box for two months. At this time, the charging/discharging capacity (mAh/g) was determined such that a charging/discharging curve was measured by a negative electrode whose weight has already been known, or the aforementioned positive electrode, and the resulting value was divided by the weight of electrodes using the obtained charging/discharging amounts as described above. Further, change of hues of the non-aqueous electrolyte obtained immediately after the non-aqueous electrolyte was prepared and after the non-aqueous electrolyte was left in the gloved box for two months was visually observed. The results are shown in table 1.

[Making of a non-aqueous electrolyte secondary cell]

A cobalt oxide represented by chemical formula $LiCoO_2$ was used as a positive electrode active substance. 10 parts of acetylene black (conductive assistant) and 10 parts of teflon binder (binder resin) were added to 100 parts of $LiCoO_2$. This was kneaded with an organic solvent (a mixture of ethyl acetate and ethanol in a ratio of 50 to 50 wt%).

Thereafter, this was press-rolled to form a thin positive electrode sheet (thickness: 100μm and width: 40 mm).

Thereafter, the two positive electrode sheets thus obtained were used to sandwich therebetween an aluminum foil (collector) having a thickness of 25 μm and having a conductive adhesive applied on the surface thereof. A separator (a micro-porous polypropylene film) having a thickness of 25 μm was interposed between the two positive electrode sheets, and a lithium metal foil having a thickness of 150 was superimposed thereon, and then rolled up to thereby make a cylindrical electrode. The cylindrical electrode has a positive electrode length of about 260mm.

The non-aqueous electrolyte was impregnated into the cylindrical electrode, and sealed to thereby form a size AA lithium cell.

<Measurement and evaluation of cell properties and the like>

After initial properties (such as voltages and internal resistances) of the cell obtained were measured and evaluated at 20°C, charging/ discharging cycle performance and discharging characteristics at low temperature were measured and evaluated by a method of evaluation described below. The results are shown in table 1.

<Evaluation of charging/discharging cycle performance>

Charging/discharging was repeated and reached to 50 cycles, providing that a maximum voltage was 4.5V, a minimum voltage was 3.0V, a discharging current was 100mA, and a charging current was 50mA. A charging/discharging capacity at this time was compared with that at the initial stage of charging/ discharging, and a capacity remaining ratio after charging/ discharging was repeated 50 times was calculated. Similarly, total three cells were measured and calculated to determine a mean value, whereby charging/discharging cycle performance was evaluated.

<Evaluation of low-temperature characteristics (measurement of discharging capacity at low temperature)>

Except that discharging was conducted at low temperature (such as 0°C and -10°C), charging/discharging of the obtained cells was repeated to 50 cycles under the same conditions as the "Evaluation of charging/discharging cycle performance". A discharging capacity at such low temperature at this time was compared with that measured at 20°C to thereby calculate a discharging capacity remaining ratio by using the following equation (2). Similarly, the discharging capacity remaining ratios of total three cells were measured and calculated to determine a mean value, whereby discharging characteristics at low temperature were evaluated. The results are shown in table 1.

Equation (2):

$$\text{Discharging capacity remaining ratio} = \text{discharging capacity at low (temperature/discharging capacity (20°C))} \times 100(\%)$$

Example 2:

Except that the amount of the mixed solvent of diethyl carbonate and ethylene carbonate was changed to 95 ml, and the amount of the phosphazene derivative was changed to 5 ml (5 vol%) in the "Preparation of a non-aqueous electrolyte" of Example 1, a non-aqueous electrolyte (viscosity at 25°C: 3.9 mPa·s (3.9 cP) was prepared in the same manner as that in Example 1, whereby incombustibility, flame retardancy, safety, and deterioration resistance were evaluated. Further, a non-aqueous electrolyte secondary cell was made in the same manner as that in Example 1, whereby initial cell characteristics (such as voltages and internal resistances), charging/discharging cycle performance, and low-temperature characteristics were respectively measured and evaluated. The results are shown in table 1.

Example 3:

Except that the amount of the mixed solvent of diethyl carbonate and ethylene carbonate was changed to 95 ml, the amount of the phosphazene derivative was changed to 5 ml (5 vol%), and $LiBF_4$ (supporting salt) was replaced by $LiPF_6$ (supporting salt) in the "Preparation of a non-aqueous electrolyte" of Example 1, a non-aqueous electrolyte (viscosity at 25°C: 3.9 mPa·s (3.9 cP) was prepared in the same manner as that in Example 1, whereby incombustibility, flame retardancy, safety, and deterioration resistance were evaluated. Further, a non-aqueous electrolyte secondary cell was made in the same manner as that in Example 1, whereby initial cell characteristics (such as voltages and internal

resistances), charging/discharging cycle performance, and low-temperature characteristics were respectively measured and evaluated. The results are shown in table 1.

Comparative Example 1:

Except that the phosphazene derivative was replaced by a phosphazene derivative (a cyclic phosphazene derivative represented by formula (1) in which n is 3 and 6R's are all ethoxyethoxy groups) in the "Preparation of a non-aqueous electrolyte" of Example 1, a non-aqueous electrolyte (viscosity at 25°C: 23.5 mPa·s (23.5 cP)) was prepared in the same manner as that in Example 1, whereby incombustibility, flame retardancy, safety, and deterioration resistance were evaluated. Further, a non-aqueous electrolyte secondary cell was made in the same manner as that in Example 1, whereby initial cell characteristics (such as voltages and internal resistances), charging/ discharging cycle performance, and low-temperature characteristics were respectively measured and evaluated. The results are shown in table 1.

Table 1

| EXAMPLES | Immediately after preparation of electrolyte (Evaluation of deterioration) | | | After left for 2 months ( in gloved box) (Evaluation of deterioration) | | | Change of hues | Evaluation of deterioration | Cell properties (charging/ discharging capacity (mAh/g)) | | Low-temp. characteristics (discharging capacity remaining ratio(%) in 50 cycles) | | Cell properties (initial internal resistance (Ω)) | Cell properties (initial voltage) | Flame retardancy/ incombustibility | Evaluation of safety | Viscosity of non-aqueous electrolyte (before adding supporting salt) at 25°C (mPa·s(cP)) | Viscosity of non-aqueous electrolyte at 25°C (mPa·s(cP)) |
|---|---|---|---|---|---|---|---|---|---|---|---|---|---|---|---|---|---|---|
| | Charge/discharge capacity (mAh/g) | HF concentration (ppm) | Moisture percentage (ppm) | Charge/discharge capacity (mAh/g) | HF concentration (ppm) | Moisture percentage (ppm) | | | After initial charge/discharge | After 20 cycles charge/discharge | -10°C during discharging | -20°C during discharging | | | | | | |
| Example 1 | 145 | 2 | 2 | 144 | 2 | 2 | none | stable | 145 | 143 | 90 | 50 | 0.12 | 2.7 | incombustible | not ignited, extremely high safety | 2.1 | 4.2 |
| Example 2 | 145 | 2 | 2 | 145 | 2 | 2 | none | stable | 145 | 143 | 90 | 50 | 0.1 | 2.7 | incombustible | not ignited, very high safety | 2.0 | 3.9 |
| Example 3 | 147 | 2 | 1 | 145 | 2 | 1 | none | stable | 145 | 145 | 90 | 50 | 0.1 | 2.6 | incombustible | not ignited, extremely high safety | 2.0 | 3.9 |
| Com. Example 1 | 143 | 1 | 2 | 142 | 1 | 2 | none | stable | 144 | 140 | 70 | 30 | 0.18 | 2.8 | flame retardant | ignited, but no practical problem | 8.0 | 23.5 |

According to the results of table 1, a phosphazene derivative having excellent flame retardancy was used in Comparative Example 1. However, Examples 1 to 3 in which test flames exhibited no ignition posses more superior safety as compared to Comparative Example 1. Hence, it should be appreciated that the present invention can provide an extremely safe non-aqueous electrolyte secondary cell.

<<Non-aqueous electrolyte double layer capacitor>>

Example 4

[Preparation of a non-aqueous electrolyte]

10 ml (10 vol%) of a phosphazene derivative (a cyclic phosphazene derivative represented by formula (1) in which n is 3, 2R's are individually fluorine, 4R's are individually a fluorine-containing methoxy group)(the content of fluorine in the phosphazene derivative: 52 wt%)(an additive for a non-aqueous electrolyte) was added to 90ml of propylene carbonate (aprotic organic solvent). Further, tetra ethyl ammonium fluoroborate $(C_2H_5)_4N \cdot BF_4$ (supporting salt) was dissolved in this mixture at the concentration of 1 mol/kg to thereby prepare a non-aqueous electrolyte (viscosity at 25°C: 4.9 mPa·s (4.9 cP)).

<Evaluation of incombustibility, flame retardancy, safety and deterioration resistance>

Incombustibility, flame retardancy, safety and deterioration resistance were evaluated in the same manner as those of the non-aqueous electrolyte secondary cell. However, during the evaluation of deterioration resistance, in the case of the non-aqueous electrolyte secondary cell, charging/discharging capacity was measured. However, instead of the charging/ discharging capacity, in the case of the non-aqueous electrolyte electric double layer capacitor, internal resistance ($\Omega$) was measured. The results are shown in table 2.

[Preparation of positive electrodes and negative electrodes (polarizable electrolytes)]

Activated carbon (Kuractive-1500 manufactured by Kuraray Chemical Co., Ltd), acetylene black (conductive agent) and tetrafluoroethylene (PTFE) (binder) are each mixed so that a massive ratio (activated carbon/acetylene black/PTFE) is 8/1/1 thus obtaining a mixture.

100 mg of the obtained mixture was sampled, and contained in a pressure tight carbon container (20 mm$\phi$), and press-powder formed at a pressure of 150 kgf/cm$^2$ and at room temperature, whereby positive electrode and negative electrode (polarizable electrodes) were made.

[Making of a non-aqueous electrolyte double layer capacitor]

The obtained positive electrode and negative electrode, and aluminum metal plate (collector) (thickness: 0.5 mm), and polypropylene/polyethylene plate (separator) (thickness: 25 $\mu$m) were used to assemble a cell. The cell was sufficiently vacuum-dried.

The cell was impregnated in the non-aqueous electrolyte to make a non-aqueous electrolyte electric double layer capacitor.

<Measurement of electric conductivity of a non-aqueous electrolyte electric double layer capacitor>

While applying a constant current (5 mA) to the obtained capacitor, electric conductivity of the capacitor (conductivity of quaternary ammonium salt solution: 0.5 mol/l) was measured by a conductivity meter (CDM210 manufactured by Radio Meter Trading Co., Ltd.) The results are shown in table 2.

Further, it is a level at which no practical problem is caused as long as the electric conductivity of the non-aqueous electrolyte electric double layer capacitor at 25°C is 5.0mS/cm or more.

Example 5:

Except that the amount of propylene carbonate was changed to 95 ml, and the amount of the phosphazene derivative was changed to 5 ml(5 vol%) in the "Preparation of a non-aqueous electrolyte" of Example 4, a non-aqueous electrolyte (viscosity at 25°C: 4.8 mPa·s (4.8 cP)) was prepared in the same manner as that in Example 1 to thereby evaluate incombustibility, flame retardancy, safety and deterioration resistance. Further, a non-aqueous electrolyte double layer capacitor was made in the same manner as that in Example 1 to measure electric conductivity. The results

are shown in table 2.

Comparative Example 2:

Except that the phosphazene derivative was changed to a phosphazene derivative (a cyclic phosphazene derivative represented by formula (1) in which n is 3, all 6R's are individually ethoxyethoxy ethoxyethoxy group) in the "Preparation of a non-aqueous electrolyte" of Example 1, a non-aqueous electrolyte (viscosity at 25°C: 26.9 mPa· s (26.9 cP)) was prepared in the same manner as that in Example 4 to thereby evaluate incombustibility, flame retardancy, safety and deterioration resistance. Further, a non-aqueous electrolyte double layer capacitor was made in the same manner as that in Example 4 to measure electric conductivity. The results are shown in table 2.

Table 2

| EXAMPLES | Directly after preparation of electrolyte (Evaluation of deterioration) | | | After left for 2 months (in gloved box) (Evaluation of deterioration) | | | Change of hues | Evaluation of deterioration | flame retardancy /incombustibility | Evaluation of safety (Was test flame ignited?) | Viscosity of non-aqueous electrolyte (before adding supporting salt) (mPa·(cP)) | Viscosity of non-aqueous electrolyte (mPa·(cP)) | Conductivity of non-aqueous electrolyte (mS/cm) |
|---|---|---|---|---|---|---|---|---|---|---|---|---|---|
| | Charging /discharging capacity (mAh/g) | HF concentration (ppm) | Moisture percentage (ppm) | Charging /discharging capacity (mAh/g) | HF concentration (ppm) | Moisture percentage (ppm) | | | | | | | |
| Example 4 | 0.11 | below 1 | 2 | 0.11 | below 1 | 2 | none | stable | incom-bustible | not ignited, extremely high safety | 2.7 | 4.9 | 9.8 |
| Example 5 | 0.10 | below 1 | 2 | 0.10 | below 1 | 2 | none | stable | incom-bustible | not ignited, significantly high safety | 2.6 | 4.8 | 11.0 |
| Com. Example 2 | 0.18 | below 1 | 2 | 0.10 | below 1 | below 2 | none | stable | flame retardant | ignited, but no practical problem | 14.0 | 26.9 | 2.6 |

As described above, in accordance with the present invention, the above-described additive for a non-aqueous electrolyte is added to a non-aqueous electrolyte of an energy storage device, whereby it becomes possible to manufacture an energy storage device of a non-aqueous electrolyte, while maintaining electric characteristics required for the device, which exhibits good resistance to deterioration, good low interface resistance at the non-aqueous electrolyte, and accordingly is excellent in low-temperature characteristics, and which is excellent in incombustibility and accordingly is significantly high in safety. The present invention provides a non-aqueous electrolyte secondary cell and a non-aqueous electrolyte electric double layer capacitor comprising the additive for a non-aqueous electrolyte which exhibit good resistance to deterioration, good low interface resistance at the non-aqueous electrolyte, and accordingly are excellent in low-temperature characteristics, and which are excellent incombustibility, and accordingly are significantly high in safety.

Industrial Applicability of the Invention

The present invention provides an additive for a non-aqueous electrolyte in which risks due to non-aqueous electrolytes that have conventionally been a problem in an energy storage device such as a non-aqueous electrolyte cell and the like can be minimized to largely improve safety of the device. Consequently, it is apparent that the present invention has industrial usability.

More than half of notebook type personal computers, cellular phones and the like which have been rapidly in wide use are still now driven by non-aqueous electrolyte secondary cells. Since the present invention can provide the non-aqueous electrolyte secondary cells with excellent electric characteristics at low temperature and extremely high safety, the industrial value in use is significantly high.

On the other hand, lately, instead of cells, non-aqueous electrolyte electric double layer capacitors have been put into practical use as a new energy storage product that works tenderly to global atmosphere. The present invention provides a non-aqueous electrolyte electric double layer capacitor with high safety and high performance. At present, the practical use of the non-aqueous electrolyte electric double layer capacitors has been evolved, application range thereof to electromobiles, hybrid cars, or the like is widely increasing. Consequently, it can be said that industrial value of the present invention is significantly high.

## Claims

1. A non-aqueous electrolyte secondary cell comprising:

   a non-aqueous electrolyte including an additive for a non-aqueous electrolyte containing therein a phosphazene derivative represented by formula (1) and a supporting salt;
   a positive electrode; and
   a negative electrode:

   $$(PNR_2)_n \cdots\cdots \qquad \text{formula (1)}$$

   wherein n is 3, four of the R groups are fluorine, and two of the R groups are fluorine containing methoxy substituents, and the non-aqueous electrolyte has a viscosity at 25°C of 0.01 Pa.s (10 cP) or less.

2. The cell of claim 1 wherein the content of the phosphazene derivative in the non-aqueous electrolyte is 2 vol% or more.

3. The cell of claim 2 wherein the content of the phosphazene derivative in the non-aqueous electrolyte is 10 vol% or more.

4. The cell of claim 1 wherein the non-aqueous electrolyte contains therein an aprotic organic solvent.

5. The cell of claim 4 wherein the aprotic organic solvent contains therein a cyclic or chain ester compound.

6. The cell of claim 5, wherein the non-aqueous electrolyte contains therein LiPF6 as a supporting salt, ethylene carbonate and/or propylene carbonate as aprotic organic solvents, and no less than 5 vol% of a phosphazene derivative.

7. The cell of claim 5, wherein the non-aqueous electrolyte contains therein $LiCF_3SO_3$, as a supporting salt, propylene carbonate as an aprotic organic solvent, and no less than 5 vol% of a phosphazene derivative.

**8.** A non-aqueous electrolyte electric double layer capacitor comprising:

a non-aqueous electrolyte comprising an additive for a non-aqueous electrolyte containing therein a phosphazene derivative represented by formula (1) and a supporting salt;
a positive electrode; and
a negative electrode:

$(PNR_2)n$ ....... formula (1)

wherein n is 3, four of the R groups are fluorine, and two of the R groups are fluorine containing methoxy substituents, and the non-aqueous electrolyte has a viscosity at 25°C of 0.01 Pa.s (10 cP) or less.

**9.** The non-aqueous electrolyte electric double layer capacitor of claim 8, wherein the content of the phosphazene derivative in the non-aqueous electrolyte is 2 vol% or more.

**10.** The non-aqueous electrolyte electric double layer capacitor of claim 9, wherein the content of the phosphazene derivative in the non-aqueous electrolyte is 10 vol% or more.

**11.** The non-aqueous electrolyte electric double layer capacitor of claim 8, wherein the non-aqueous electrolyte contains therein an aprotic organic solvent.

**12.** The non-aqueous electrolyte electric double layer capacitor of claim 11 wherein the aprotic organic solvent contains therein a cyclic or chain ester compound.

## Patentansprüche

**1.** Sekundärzelle mit nichtwässrigem Elektrolyt, enthaltend:

einen nichtwässrigen Elektrolyt, der ein Additiv für einen nichtwässrigen Elektrolyt enthält, das ein durch Formel (1) dargestelltes Phosphazenderivat und ein Stützsalz enthält;
eine positive Elektrode; und
eine negative Elektrode,

$(PNR_2)_n$ Formel (1)

wobei n 3 ist, vier der R-Gruppen Fluor sind und zwei der R-Gruppen Methoxy-Substituenten enthaltender Fluor sind, und
der nichtwässrige Elektrolyt eine Viskosität bei 25 °C von 0,01 Pa·s (10 cP) oder weniger hat.

**2.** Zelle nach Anspruch 1, wobei der Gehalt des Phosphazenderivats in dem nichtwässrigen Elektrolyt 2 Vol.-% oder mehr beträgt.

**3.** Zelle nach Anspruch 2, wobei der Gehalt des Phosphazenderivats in dem nichtwässrigen Elektrolyt 10 Vol.-% oder mehr beträgt.

**4.** Zelle nach Anspruch 1, wobei der nichtwässrige Elektrolyt ein aprotisches organisches Lösemittel enthält.

**5.** Zelle nach Anspruch 4, wobei das aprotische organische Lösemittel eine zyklische oder eine Ketten-Esterverbindung enthält.

**6.** Zelle nach Anspruch 5, wobei der nichtwässrige Elektrolyt $LiPF_6$ als ein Stützsalz, Ethylencarbonat und/oder Propylencarbonat als aprotische organische Lösemittel und nicht weniger als 5 Vol.-% eines Phosphazenderivats enthält.

**7.** Zelle nach Anspruch 5, wobei der nicht wässrige Elektrolyt $LiCF_3SO_3$ als ein Stützsalz, Propylencarbonat als ein aprotisches organisches Lösemittel und nicht weniger als 5 Vol.-% eines Phosphazenderivats enthält.

**8.** Doppellagiger Kondensator mit einem nichtwässrigen Elektrolyt, enthaltend:

einen nichtwässrigen Elektrolyt, der ein Additiv für einen nichtwässrigen Elektrolyt enthält, das ein durch Formel (1) dargestelltes Phosphazenderivat und ein Stützsalz enthält;
eine positive Elektrode; und
eine negative Elektrode,

$(PNR_2)_n$ Formel (1)

wobei n 3 ist, vier der R-Gruppen Fluor sind und zwei der R-Gruppen Methoxy-Substituenten enthaltender Fluor sind, und
der nichtwässrige Elektrolyt eine Viskosität bei 25 °C von 0,01 Pa·s (10 cP) oder weniger hat.

**9.** Doppellagiger Kondensator mit einem nichtwässrigen Elektrolyt nach Anspruch 8, wobei der Gehalt des Phosphazenderivats in dem nichtwässrigen Elektrolyt 2 Vol.-% oder mehr beträgt.

**10.** Doppellagiger Kondensator mit einem nichtwässrigen Elektrolyt nach Anspruch 9, wobei der Gehalt des Phosphazenderivats in dem nichtwässrigen Elektrolyt 10 Vol.-% oder mehr beträgt.

**11.** Doppellagiger Kondensator mit einem nichtwässrigen Elektrolyt nach Anspruch 8, wobei der nichtwässrige Elektrolyt ein aprotisches organisches Lösemittel enthält.

**12.** Doppellagiger Kondensator mit einem nichtwässrigen Elektrolyt nach Anspruch 11, wobei das aprotische organische Lösemittel eine zyklische oder eine Ketten-Esterverbindung enthält.

**Revendications**

**1.** Accumulateur à électrolyte non aqueux comprenant :

un électrolyte non aqueux comportant un additif pour un électrolyte non aqueux qui contient un dérivé phosphazène représenté par la formule (1), et un sel de support ;
une électrode positive ; et
une électrode négative,

$(PNF_2)_n$ formule (1)

dans lequel n est 3, quatre des groupes R sont du fluor et deux des groupes R sont des substituants méthoxy contenant du fluor, et
l'électrolyte non aqueux a une viscosité à 25 °C de 0,01Pa.s (10 cP) ou moins.

**2.** Accumulateur selon la revendication 1, dans lequel la teneur en dérivé phosphazène dans l'électrolyte non aqueux est égale à 2 % en volume, ou plus.

**3.** Accumulateur selon la revendication 2, dans lequel la teneur en dérivé phosphazène dans l'électrolyte non aqueux est égale à 10 % en volume, ou plus.

**4.** Accumulateur selon la revendication 1, dans lequel l'électrolyte non aqueux contient un solvant organique aprotique.

**5.** Accumulateur selon la revendication 4, dans lequel le solvant organique aprotique contient un composé ester cyclique ou à chaine.

**6.** Accumulateur selon la revendication 5, dans lequel l'électrolyte non aqueux contient $LiPF_6$ comme sel de support, du carbonate d'éthylène et/ou du carbonate de propylène comme solvants organiques aprotiques, et pas moins de 5 % en volume d'un dérivé phosphazène.

**7.** Accumulateur selon la revendication 5, dans lequel l'électrolyte non aqueux contient $LiCF_3SO_3$, comme sel de support, du carbonate de propylène comme solvant organique aprotique, et pas moins de 5 % en volume d'un dérivé

phosphazène.

**8.** Condensateur électrique double couche à électrolyte non aqueux, comprenant :

un électrolyte non aqueux comportant un additif pour un électrolyte non aqueux qui contient un dérivé phosphazène représenté par la formule (1), et un sel de support ;
une électrode positive ; et
une électrode négative,

$(PNF_2)_n$ formule (1)

dans lequel n est 3, quatre des groupes R sont du fluor et deux des groupes R sont des substituants méthoxy contenant du fluor, et
l'électrolyte non aqueux a une viscosité à 25 °C de 0,01Pa.s (10 cP) ou moins.

**9.** Condensateur électrique double couche à électrolyte non aqueux selon la revendication 8, dans lequel la teneur en dérivé phosphazène dans l'électrolyte non aqueux est égale à 2 % en volume, ou plus.

**10.** Condensateur électrique double couche à électrolyte non aqueux selon la revendication 9, dans lequel la teneur en dérivé phosphazène dans l'électrolyte non aqueux est égale à 10 % en volume, ou plus.

**11.** Condensateur électrique double couche à électrolyte non aqueux selon la revendication 8, dans lequel l'électrolyte non aqueux contient un solvant organique aprotique.

**12.** Condensateur électrique double couche à électrolyte non aqueux selon la revendication 11, dans lequel le solvant organique aprotique contient un composé d'ester cyclique ou à chaine.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9744842 A


### Non-patent literature cited in the description


- **NIKKAN KOGYO SHINBUN.** *Electronic Technology,* 1997, vol. 39 (9